# FASCICULE DE BREVET EUROPEEN

(11) **EP 1 372 809 B1**
(45) Date de publication et mention de la délivrance du brevet: **07.06.2006**
(21) Numéro de dépôt: 02722343.7
(22) Date de dépôt: 13.03.2002
(51) Int. Cl.: B01D 29/11, B01D 29/86

(54) **DISPOSITIF DE FILTRATION EN VOIE LIQUIDE ET EN CONTINU METTANT EN OEUVRE DES ULTRASONS A HAUTE DENSITE DE PUISSANCE**
VORRICHTUNG ZUM KONTINUIERLICHEN FILTRIEREN VON FLÜSSIGKEITEN MITTELS ULTRASCHALL MIT HOHER LEISTUNGSDICHTE
LIQUID PROCESS AND CONTINUOUS FILTERING DEVICE USING HIGH POWER DENSITY ULTRASOUNDS

(30) Priorité: 13.03.2001 FR 0103387; 01.06.2001 FR 0107282
(43) Date de publication de la demande: 02.01.2004
(73) Titulaire: SODEVA, 73100 Gresy sur Aix (FR)
(72) Inventeur: DUBRUQUE, Dominique, F-73160 Vimines (FR); VAXELAIRE, Philippe, F-73100 Aix les Bains (FR); BOURSIER, Gilles, F-69110 Saint Foy Les Lyon (FR)
(74) Mandataire: Ahner, Francis
(86) Numéro de dépôt international: PCT/FR2002/000889
(87) Numéro de publication internationale: WO 2002/072229

(56) Documents cités:
- EP-A- 0 904 820
- WO-A-94/21361
- DE-A- 3 811 706
- FR-A- 2 743 929
- FR-A- 2 769 516
- US-A- 5 384 508
- PATENT ABSTRACTS OF JAPAN vol. 1996, no. 10, 31 octobre 1996 (1996-10-31) & JP 08 141325 A (CENTRAL GLASS CO LTD), 4 juin 1996 (1996-06-04) & DATABASE WPI Derwent Publications Ltd., London, GB; AN 1996-316930

## Description

La présente invention concerne un dispositif de filtration en voie liquide et en continu mettant en oeuvre des ultrasons à haute densité de puissance.

La présente invention concerne plus particulièrement un dispositif de filtration en voie liquide et en continu utilisant une unité modulaire de traitement ultrasonique tubulaire servant à la fois d'enveloppe externe à un élément cylindrique filtrant et de source d'ultrasons à haute densité de puissance.

Une telle unité modulaire de traitement se trouve décrite de manière détaillée dans le brevet français FR 2 671 737 ou dans le brevet européen correspondant EP 0 567 579.

Dans le domaine de la filtration en voie liquide, on connaît déjà un certain nombre de dispositifs comprenant, à l'intérieur d'une cuve de filtration où circule un liquide, des éléments filtrants que traverse le liquide et qui retiennent les particules à filtrer.

On connaît en outre des dispositifs de nettoyage et de régénération d'éléments filtrants, par application périodique d'un contre courant de liquide, éventuellement de façon simultanée avec la mise en oeuvre d'une vibration ultrasonique au sein de ladite cuve de filtration. Cette vibration peut être créée par une source ultrasonique de vibration accolée à ladite cuve, ou bien immergée à l'intérieur de ladite cuve, à proximité des éléments filtrants.

L'effet du nettoyage obtenu grâce à la vibration ultrasonique est dû au phénomène physique de cavitation dans les liquides, bien connu de l'homme de l'art.

On connaît aussi des dispositifs de filtration dans lesquels on applique en continu, pendant le processus de filtration, une vibration ultrasonique fournissant une assistance à la filtration.

Par exemple, à l'aide d'une sonotrode cylindrique droite telle que celles couramment utilisées en laboratoire, il est possible de forcer le passage des particules de taille inférieure à l'ouverture de la maille ou des pores desdits éléments filtrants, à condition que l'extrémité de la sonotrode soit suffisamment proche desdits éléments pour que l'amplitude de la vibration obtenue dans le liquide au contact desdits éléments filtrants, soit suffisamment grande.

Un tel dispositif reste limité à des applications de laboratoire, ou à de très faibles débits, et ne se prête donc pas à une utilisation en ligne dans un processus de fabrication, en raison de la géométrie de la sonotrode dont la surface vibrante utile est nécessairement trop petite.

On connaît aussi des dispositifs où l'on applique une vibration ultrasonique à une enceinte dans laquelle se situent les éléments filtrants.

De façon générale, cette enceinte n'est pas acoustiquement accordée aux éléments de création et/ou de propagation de ladite vibration, ce qui limite la puissance accoustique utile transmise au niveau des éléments filtrants et ne permet pas d'obtenir une distribution homogène de cette puissance sur les éléments filtrants.

Ainsi, le document EP 0 904 820 décrit un tel dispositif de filtration en voie liquide et en continu comprenant un élément filtrant disposé à l'intérieur d'une enveloppe externe mise en vibration ultrasonique par un convertisseur ultrasonique.

Il existe d'autres sources de vibrations ultrasoniques, immersibles dans les liquides, telles que les tubes plongeurs.

Ceux-ci présentent une surface vibrante utile importante. Ils génèrent toutefois une densité de puissance de cavitation limitée et souvent insuffisante (inférieure à 1W/cm² de surface filtrante) pour améliorer sensiblement un processus de filtration.

En outre, comme dans ce cas l'élément filtrant ne peut se trouver qu'à l'extérieur des tubes ultrasons, l'installation présente l'inconvénient d'être obligatoirement encombrante et de contraindre à l'utilisation de filtres de grands diamètres et d'une enveloppe tubulaire externe.

A ce jour, il n'existe donc pas de dispositif de filtration en voie liquide satisfaisant les différentes contraintes suivantes :
- mettre en oeuvre de façon continue une vibration ultrasonique pour améliorer le processus de filtration ;
- obtenir une répartition homogène de la puissance ultrasonique de cavitation sur l'ensemble de la surface filtrante ;
- obtenir, au contact de la surface, une densité moyenne de puissance ultrasonique nettement supérieure à 2 watt par cm2 de surface filtrante ;
- être compact ;
- être susceptible d'une utilisation industrielle.

La présente invention a précisément eu pour but de satisfaire tous les critères ci-dessus.

Conformément à la présente invention, le dispositif de filtration comprend un élément filtrant disposé à l'intérieur d'une enveloppe mise en vibration ultrasonique par un convertisseur ultrasonique caractérisé en ce que :
- l'enveloppe est un corps métallique tubulaire de surface intérieure cylindrique et de section droite circulaire, ouvert à ses deux extrémités d'alimentation et d'évacuation, la surface extérieure dudit corps métallique tubulaire présentant au voisinage de la zone nodale une couronne co-axiale audit tube et faisant saillie radialement, cette couronne étant équipée à sa périphérie du convertisseur ultrasonique faisant saillie radialement et dont la fréquence est égale à la fréquence de vibration de ladite couronne et à la fréquence de vibration longitudinale dudit corps métallique tubulaire, ledit corps métallique tubulaire, ladite couronne et ledit convertisseur ultrasonique constituant, en combinaison, une unité modulaire de traitement ultrasonique et en ce que,
- ledit élément cylindrique filtrant présente une surface minimale de filtration d'environ 50 cm² et de préférence d'environ 80 cm² avec une ouverture de maille inférieure à environ 20 µm, et est agencé à l'intérieur du tube métallique tubulaire et de manière co-axiale à ce dernier entre ses extrémités d'alimentation et d'évacuation, la densité nominale de puissance ultrasonique dissipée à l'intérieur du corps métallique tubulaire étant supérieure à environ 2 Watt par cm² de surface filtrante.

Selon une autre caractéristique de l'invention, la longueur du corps métallique tubulaire est égale à un multiple entier de demi-longueur d'onde de la fréquence de vibration ultrasonique délivrée par le convertisseur, les diamètres intérieur et extérieur de la couronne étant déterminés de manière que la fréquence de vibration de ladite couronne soit à la même fréquence de vibration ultrasonique que celle délivrée par le convertisseur.

Selon une autre caractéristique de la présente invention, l'élément cylindrique filtrant est choisi parmi des filtres métalliques tissés ou non tissés montés sur support métallique, filtres synthétiques tissés ou non tissés montés sur support métallique, filtres métalliques multicouches frittés et filtres minéraux ou métalliques frittés autoporteurs.

Selon une caractéristique particulière de l'invention, l'élément cylindrique filtrant se trouve raccordé au corps métallique tubulaire par des pièces de raccordement conçues de telle sorte que le liquide à filtrer passe, soit de l'extérieur de l'élément filtrant vers l'intérieur de ce dernier, soit, inversement, de l'intérieur de l'élément filtrant vers l'extérieur de ce dernier.

Selon une autre variante de l'invention, les pièces de raccordement entre le corps métallique tubulaire et l'élément cylindrique filtrant, ainsi que le circuit de circulation de fluide à traiter sont conçus de telle sorte que la filtration s'effectue selon un principe de filtration tangentielle.

L'invention concerne également un procédé d'utilisation du dispositif de filtration, intégré dans un circuit de circulation de liquide à filtrer, ce dernier permettant de mesurer la différence de pression existant entre l'entrée et la sortie du dispositif et de régler cette différence de pression en ajustant le débit de liquide dans le circuit et/ou la perte de charge en aval dudit dispositif.
De manière générale, l'invention concerne un procédé d'utilisation d'un dispositif de filtration selon l'invention, intégré dans un circuit de circulation de liquide à filtrer, ce dernier permettant de procéder à un nettoyage périodique à contre-courant de l'élément filtrant dès que la différence de pression existant entre l'entrée et la sortie dudit élément filtrant, excède une valeur de seuil prédéterminée.

L'invention concerne également un procédé d'utilisation d'un dispositif de filtration tel que décrit précédemment, selon lequel l'intensité de cavitation dans le liquide à filtrer peut être ajustée par réglage de la puissance de la vibration ultrasonique et/ou par le choix de la forme d'un booster interposé entre le transducteur ultrasonique et la surface extérieure de ladite couronne faisant saillie radialement au voisinage de la zone nodale dudit corps métallique tubulaire.

Enfin, la présente invention permet la construction d'un filtre ultrasonique réalisé par couplage en série ou en parallèle d'une pluralité d'unités modulaires de traitement ultrasonique telles que décrites précédemment renfermant un élément cylindrique filtrant co-axial, créant ainsi un dispositif multi-filtres en ligne. Un tel filtre ultrasonique peut comprendre plusieurs convertisseurs alimentés en parallèle par le même générateur.

La présente invention sera décrite ci-après plus en détails en se référant à deux modes de réalisation particuliers illustrés par les figures annexées dans lesquelles les figures 1 et 2 correspondent à un premier mode de réalisation du dispositif de filtration simple et la figure 3 correspond à un mode de réalisation pour filtration tangentielle. Sur ces figures et dans la suite de la description, les éléments correspondants sont désignés par les mêmes références.

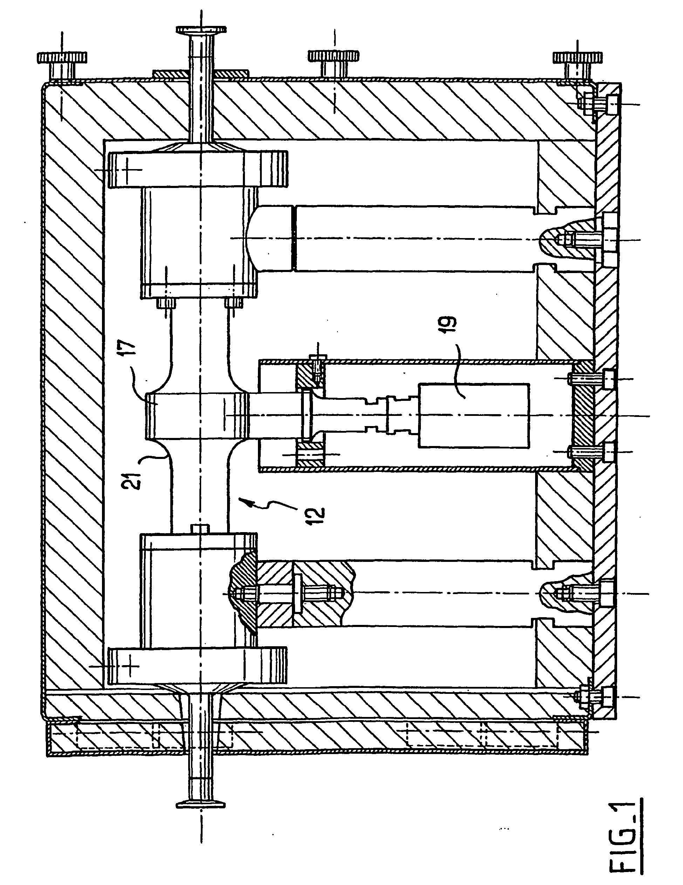

Telle que représentée sur les figures 1 à 3, l'unité modulaire 12 de traitement ultrasonique ou réacteur ultrasonique tubulaire 12 est principalement constituée de trois éléments caractéristiques essentiels. L'unité modulaire 12 comprend tout d'abord un corps métallique tubulaire 11 présentant une surface intérieure 13 cylindrique et de section droite circulaire. Le corps métallique tubulaire 11 est ouvert à ses deux extrémités, c'est-à-dire respectivement à son extrémité d'alimentation 10 et à son extrémité d'évacuation 15. Ces deux extrémités d'alimentation et d'évacuation 10, 15 seront couplées à des conduits d'alimentation et d'évacuation eux-mêmes éventuellement munis de pompes de circulation. Cette partie de l'installation n'est pas représentée étant donné qu'elle fait appel à des organes tout à fait classiques bien connus de l'homme du métier.

L'unité modulaire 12 comprend également sur la surface extérieure du corps métallique tubulaire 11, au voisinage de la zone nodale de cette dernière, une couronne 17 coaxiale audit tube, ladite couronne faisant radialement saillie vers l'extérieur de la surface libre du corps tubulaire 11.

Enfin, l'unité modulaire 12 comprend au moins un convertisseur ultrasonique 19 qui est agencé radialement et de façon solidaire de ladite couronne 17 à la périphérie de cette dernière. La fréquence dudit convertisseur 19 est égale à la fréquence de vibration de ladite couronne 17 et à la fréquence de vibration longitudinale du corps métallique tubulaire 11.

Dans la pratique, on utilise par exemple comme convertisseur ultrasonique 19 un convertisseur classique, par exemple du type à excitation piézo-électrique. Il peut par exemple être du type "Triplet de Langevin" tel que cela se trouve décrit dans l'ouvrage High Intensity Ultrasonics de B. Brown et J.E. Goodman.

Selon le mode de réalisation particulier représenté aux figures 1 à 3, la couronne coaxiale 17 est usinée dans la masse du corps métallique tubulaire 11. Dans ce type de réalisation, la couronne 17 se raccorde à la surface extérieure du corps tubulaire 11 par l'intermédiaire de congés de raccordement 21. Le corps métallique tubulaire 11 présente, selon le mode de réalisation décrit, une longueur égale à une demi-longueur d'onde pour la fréquence que l'on désire utiliser. Il est à noter à ce propos que la fréquence de la vibration ultrasonique délivrée par l'émetteur ou le convertisseur 19 sera également comprise entre 5 et 100 kHz. Dans ce mode de réalisation particulier la longueur du corps métallique tubulaire est rigoureusement égale à une demi longueur d'onde de la fréquence de la vibration ultrasonique. Il est cependant parfaitement possible, dans le cadre de la présente invention, d'avoir recours à une partie métallique tubulaire de plus grande dimension, se prolongeant par exemple d'un ou des deux côtés de la couronne coaxiale 17 par une longueur égale à un multiple entier de demi longueur d'onde de la fréquence délivrée, la liaison de cette partie métallique avec l'unité modulaire 12 pouvant par exemple être réalisée au niveau des ventres d'amplitude longitudinaux (noeuds de contraintes) au moyen de filetages, emmanchements à force, soudures ou analogue ou bien encore être usinée dans la masse.

Dans une exécution particulièrement avantageuse, l'unité modulaire 12 de traitement ultrasonique pourra être un SONITUBE 20 ou 35 kHz commercialisé par la société SODEVA.

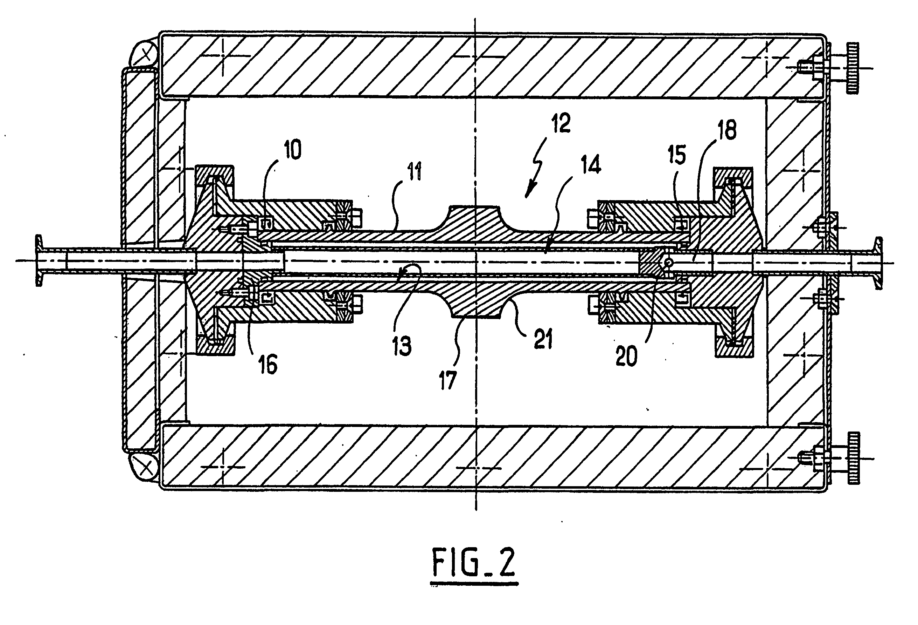

Dans le montage filtration simple illustrée par les figures 1 et 2, une pompe non représentée fait pénétrer le liquide à filtrer dans l'une des extrémités du réacteur ultrasonique modulaire 12. Le liquide à filtrer pénètre donc dans l'élément filtrant 14 par la pièce 16 ou 18. Si la pièce d'entrée est la pièce 16, le liquide est filtré par l'élément filtrant 14 de l'intérieur vers l'extérieur, avant de ressortir par les trous 20 percés dans la pièce 18.

Le gradient de pression existant dans le dispositif peut être réglé en ajustant le débit de la pompe non représentée, située en amont du dispositif et/ou en ajustant l'ouverture d'une vanne située en aval du dispositif. Des jauges de mesure de pression, situées en amont et en aval du dispositif peuvent avantageusement compléter le dispositif, le tout pouvant être installé, le cas échéant dans une installation industrielle pilotée par un automate programmable.

Dans une autre variante du montage filtration simple, la pièce d'entrée dans le réacteur ultrasonique modulaire 12 est la pièce 18 ; dans cette variante, le liquide à filtrer pénètre dans ledit réacteur ultrasonique modulaire 12 par les trous 20 percés dans la pièce 18, puis est filtré par l'élément filtrant 14 de l'extérieur vers l'intérieur, avant de ressortir par la pièce 16.

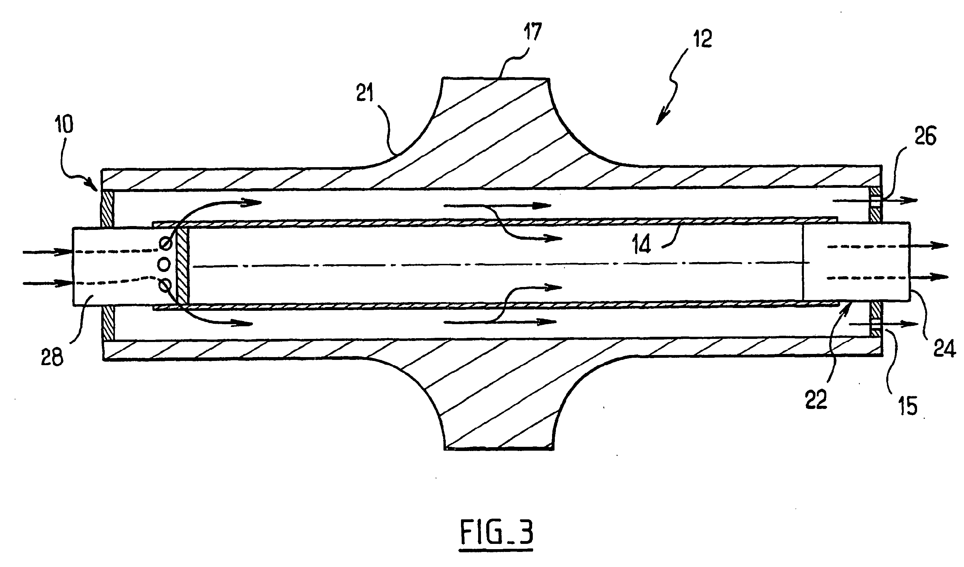

En se référant à la figure 3, dans un exemple de montage filtration tangentielle, les moyens d'obturation et de raccordement 22 présentent un perçage supplémentaire permettant une double communication du réacteur ultrasonique tubulaire 12 avec le milieu extérieur. Une première communication a lieu par le perçage central 24 et met en communication l'intérieur de l'élément filtrant 14 avec le milieu extérieur. Une deuxième communication a lieu par le perçage supplémentaire 26 et met en communication l'extérieur de l'élément filtrant 14.

Dans ce montage, le liquide à filtrer pénètre dans le réacteur ultrasonique modulaire 12 par les trous percés dans la pièce 28. Les flèches représentées sur la figure 3 matérialisent les chemins de circulation du liquide. Le liquide se divise en deux parties : la première partie traverse et est filtrée par l'élément filtrant 14 de l'extérieur vers l'intérieur, avant de ressortir du réacteur ultrasonique modulaire 12 par le perçage central 24 de la pièce 22, tandis que la deuxième partie de liquide s'écoule tangentiellement à l'élément filtrant 14 avant de ressortir dudit réacteur par le perçage supplémentaire 26.

Deux vannes situées en aval du dispositif, l'une sur le circuit du perçage central 24, l'autre sur celui du perçage supplémentaire, permettent de régler les débits respectifs de chaque circuit.

Avantageusement, quand la présente invention est placée au sein d'un circuit de liquide, elle peut faire l'objet d'un nettoyage périodique à contre-courant de l'élément filtrant, déclenché préférentiellement de façon automatique, dès que la différence de pression existant entre l'amont et l'aval dudit élément filtrant excède un seuil prédéterminé.

En conséquence de ce qui précède, la présente invention met en oeuvre de façon continue une vibration ultrasonique pour améliorer le processus de filtration. Elle permet ainsi d'obtenir une répartition homogène de la puissance ultrasonique au contact de la surface filtrante.

Un premier exemple d'utilisation de montage, conforme à celui illustré aux figures 1 et 2 a été utilisé dans la pratique de façon satisfaisante.

Le réacteur ultrasonique tubulaire 12 est un SONITUBE 35 kHz standard de la société SODEVA de 225 mm de long et 20 mm de diamètre interne, disposé en position verticale.

L'élément filtrant 14 utilisé est de type Poremet 5*µ*m absolus ; il a un diamètre extérieur de 12 mm et une longueur de 225 mm.

Une suspension de carbure de titane dans de l'eau, à raison de 15 % en poids, sous forme de poudre inférieure à 2 µm, est filtrée par l'invention afin de pièger les résidus de fabrication et les agglomérats. La suspension est pompée à partir d'un réservoir agité, avec un débit de 10 litres par minute. Elle circule au sein du réacteur ultrasonique tubulaire 12 de bas en haut et traverse l'élément filtrant 14 de l'intérieur vers l'extérieur.

L'analyse granulométrique de la suspension montre que le passant est supérieur à 99 % en masse de la phase solide. Toutefois, sans ultrasons, la pression amont monte rapidement et le liquide cesse de passer à travers l'élément filtrant 14 après environ 1 minute. Il y a colmatage dudit élément filtrant.

Avec ultrasons, la pression reste constante en tout point du circuit, la perte de charge au sein du réacteur ultrasonique tubulaire étant inférieure à 100 mb. Au bout de 12 minutes, soit 120 litres de suspension ou 21 kg de poudre de carbure, le filtre a retenu 3,6 g de particules mais a gardé sa porosité.

Dans un second exemple, le réacteur ultrasonique tubulaire 12 est un SONITUBE 20 kHz standard de la société SODEVA de 370 mm de long et 50 mm de diamètre interne, disposé en position verticale et monté en filtration tangentielle, des vannes situées en aval dudit élément filtrant permettant de moduler la différence de pression entre l'amont et l'aval dudit élément filtrant.

L'élément filtrant utilisé est un filtre Poremet 10*µ*m de 40 mm de diamètre et de 30 mm de long.

Une suspension de silice broyée dans de l'eau, à raison de 10 % en masse, sous forme d'une poudre de granulométrie comprise entre moins de 1µm et 40µm, est fractionnée par l'invention, par coupure à 10µm.

La suspension est d'abord désagglomérée dans la partie inférieure du réacteur ultrasonique tubulaire 12 ne comportant pas de filtre. Une fraction du liquide passe à travers l'élément filtrant avec la majeure partie des particules inférieures à 10 microns tandis qu'une fraction plus petite du liquide entraîne les autres particules et reste à l'extérieur de l'élément filtrant avant de sortir dudit réacteur. Durant l'opération, on constate que les pressions restent constante jusqu'à épuisement des 50 litres de suspension.

Un troisième exemple met en oeuvre un réacteur ultrasonique tubulaire 12 de type SONITUBE 35 kHz standard de la société SODEVA de 225 mm de long et 20 mm de diamètre interne, disposé en position horizontale, conformément à un mode de réalisation tel qu'illustré aux figures 1 et 2.

L'élément filtrant 14 est un filtre Poremet 2*µ*m, d'un diamètre de 12 mm et d'une longueur de 225 mm.

Il s'agit de filtrer une suspension dans de l'eau d'une poudre d'alumine à raison de 5% en masse destinée au polissage. L'objectif est d'éliminer les particules supérieures à 2*µ*m.

La suspension est pompée à un débit de 5 litres par minute. La différence de pression entre l'amont et l'aval de l'élément filtrant ne dépasse par 1 bar après 20 mn, malgré la formation d'une couche de refus d'environ 3 mm autour de l'élément filtrant.

Une simple opération à contre-courant sans ultrasons permet de récupérer les refus tout en régénérant l'élément filtrant par élimination de toutes les particules coincées dans les pores dudit élément filtrant.

## Revendications

1. Dispositif de filtration en voie liquide et en continu, comprenant un élément filtrant (14) disposé à l'intérieur d'une enveloppe mise en vibration ultrasonique (19) par un convertisseur ultrasonique, **caractérisé en ce que** :
- l'enveloppe est un corps métallique tubulaire(11) de surface intérieure cylindrique (13) et de section droite circulaire, ouvert à ses deux extrémités d'alimentation (10) et d'évacuation (15), la surface extérieure dudit corps métallique tubulaire présentant au voisinage de la zone nodale une couronne (17) co-axiale audit tube et faisant saillie radialement, cette couronne étant équipée à sa périphérie du convertisseur ultrasonique (19) faisant saillie radialement et dont la fréquence est égale à la fréquence de vibration de ladite couronne (17) et à la fréquence de vibration longitudinale dudit corps métallique tubulaire (11), ledit corps métallique tubulaire (11), ladite couronne (17) et ledit convertisseur ultrasonique (19) constituant, en combinaison, une unité modulaire (12) de traitement ultrasonique,
- ledit élément cylindrique filtrant (14) présente une surface minimale de filtration d'environ 50 cm² et de préférence d'environ 80 cm² avec une ouverture de maille inférieure à environ 20 µm, et est agencé à l'intérieur du corps métallique tubulaire (11) et de manière co-axiale à ce dernier entre ses extrémités d'alimentation (10) et d'évacuation (15),
la densité nominale de puissance ultrasonique dissipée à l'intérieur du corps métallique tubulaire étant supérieure à environ 2 Watt par cm² de surface filtrante.

2. Dispositif selon la revendication 1, **caractérisé en ce que** la longueur du corps métallique tubulaire (11) est égale à un multiple entier de demi-longueur d'onde de la fréquence de vibration ultrasonique délivrée par le convertisseur, les diamètres intérieur et extérieur de la couronne (17) étant déterminés de manière que la fréquence de vibration de ladite couronne soit à la même fréquence de vibration ultrasonique que celle délivrée par le convertisseur (19).

3. Dispositif selon l'une des revendications 1 et 2, **caractérisé en ce que** l'élément cylindrique filtrant (14) est choisi parmi des filtres métalliques tissés ou non tissés montés sur support métallique, filtres synthétiques tissés ou non tissés montés sur support métallique, filtres métalliques multicouches frittés et filtres minéraux ou métalliques frittés autoporteurs.

4. Dispositif selon l'une des revendications 1 à 3, **caractérisé en ce que** l'élément cylindrique filtrant (14) est raccordé au corps métallique tubulaire par des pièces de raccordement conçues de telle sorte que le liquide à filtrer passe de l'extérieur de l'élément filtrant vers l'intérieur de ce dernier.

5. Dispositif selon l'une des revendications 1 à 3, **caractérisé en ce que** l'élément cylindrique filtrant (14) est raccordé au corps métallique tubulaire par des pièces de raccordement conçues de telle sorte que le liquide à filtrer passe de l'intérieur de l'élément filtrant vers l'extérieur de ce dernier.

6. Dispositif selon l'une des revendications 1 à 3, **caractérisé en ce que** les pièces de raccordement entre le corps métallique tubulaire et l'élément cylindrique filtrant, ainsi que le circuit de circulation de fluide à traiter sont conçus de telle sorte que la filtration s'effectue selon un principe de filtration tangentielle.

7. Procédé d'utilisation d'un dispositif de filtration selon l'une des revendications 1 à 5, intégré dans un circuit de circulation de liquide à filtrer, ce dernier permettant de mesurer la différence de pression existant entre l'entrée et la sortie du dispositif et de régler cette différence de pression en ajustant le débit de liquide dans le circuit et/ou la perte de charge en aval dudit dispositif.

8. Procédé d'utilisation d'un dispositif de filtration selon l'une des revendications 1 à 3, intégré dans un circuit de circulation de liquide à filtrer, ce dernier permettant de procéder à un nettoyage périodique à contre-courant de l'élément filtrant, dès que la différence de pression existant entre l'entrée et la sortie dudit élément filtrant excède une valeur de seuil prédéterminée.

9. Procédé d'utilisation d'un dispositif de filtration selon l'une des revendications 1 à 6, **caractérisé en ce que** l'intensité de cavitation dans le liquide à filtrer est ajustée par réglage de la puissance de la vibration ultrasonique et/ou par le choix de la forme d'un booster interposé entre le transducteur ultrasonique et la surface extérieure de ladite couronne faisant saillie radialement au voisinage de la zone nodale dudit corps métallique tubulaire.

10. Filtre ultrasonique, **caractérisé en ce qu'**il est réalisé par couplage en série ou en parallèle d'une pluralité d'unités modulaires de traitement ultrasonique selon l'une des revendications 1 à 6, renfermant un élément cylindrique filtrant selon l'une des revendications 1 à 6 de manière à créer un dispositif multi-filtre en ligne.

11. Filtre ultrasonique selon la revendication 10, **caractérisé en ce qu'**il comprend plusieurs convertisseurs alimentés en parallèle par le même générateur.

## Claims

1. Continuous liquid filtration device comprising a filtering element (14) placed inside a casing ultrasonically vibrated by an ultrasonic converter (19), **characterized in that**:
- the casing is a tubular metal body (11) with a cylindrical internal surface (13) and of circular cross section, open at both its feed end (10) and its discharge end (15), the external surface of the said tubular metal body having, in the vicinity of the nodal zone, a collar (17) which is coaxial with the said tube and which projects radially, this collar being equipped at its periphery with the ultrasonic converter (19) which projects radially and whose frequency is equal to the vibration frequency of the said collar (17) and to the longitudinal vibration frequency of the said tubular metal body (11), the said tubular metal body (11), the said collar (17) and the said ultrasonic converter (19) constituting, in combination, a modular ultrasonic treatment unit (12),
- the said cylindrical filtering element (14) has a minimum filtration area of about 50 cm² and preferably about 80 cm² with a mesh opening of less than about 20 µm, and is arranged inside the tubular metal body (11) coaxially with the latter between its feed end (10) and its discharge end (15),
the nominal ultrasonic power density dissipated inside the tubular metal body being greater than about 2 watts per cm² of filtering area.

2. Device according to Claim 1, **characterized in that** the length of the tubular metal body (11) is equal to a whole number of half wavelengths of the ultrasonic vibration frequency delivered by the converter, the internal and external diameters of the collar (17) being determined so that the vibration frequency of the said collar is at the same ultrasonic vibration frequency as that delivered by the converter (19).

3. Device according to either of Claims 1 and 2, **characterized in that** the cylindrical filtering element (14) is chosen from woven or nonwoven metal filters mounted on a metal support, woven or nonwoven synthetic filters mounted on a metal support, sintered multilayer metal filters and self-supporting sintered metal or mineral filters.

4. Device according to one of Claims 1 to 3, **characterized in that** the cylindrical filtering element (14) is connected to the tubular metal body by connecting parts designed such that the liquid to be filtered passes from the outside of the filtering element into the latter.

5. Device according to one of Claims 1 to 3, **characterized in that** the cylindrical filtering element (14) is connected to the tubular metal body by connecting parts designed such that the liquid to be filtered passes from the inside of the filtering element to the outside of the latter.

6. Device according to one of Claims 1 to 3, **characterized in that** the connecting parts between the tubular metal body and the cylindrical filtering element together with the circuit carrying the fluid to be treated are designed such that the filtration is carried out according to a cross-flow filtration principle.

7. Method of using a filtration device according to one of Claims 1 to 5, integrated into a circuit carrying a liquid to be filtered, this method making it possible to measure the pressure difference between the inlet and the outlet of the device and to control this pressure difference by adjusting the flow rate of liquid in the circuit and/or the pressure drop downstream of the said device.

8. Method of using a filtration device according to one of Claims 1 to 3, integrated into a circuit carrying a liquid to be filtered, this method making it possible to carry out periodic countercurrent cleaning of the filtering element, as soon as the pressure difference between the inlet and the outlet of the said filtering element exceeds a predetermined threshold value.

9. Method of using a filtration device according to one of Claims 1 to 6, **characterized in that** the intensity of cavitation in the liquid to be filtered is adjusted by controlling the power of the ultrasonic vibration and/or by the choice of the shape of a booster interposed between the ultrasonic transducer and the external surface of the said collar which projects radially in the vicinity of the nodal zone of the said tubular metal body.

10. Ultrasonic filter, **characterized in that** it is made by coupling, in series or in parallel, a plurality of modular ultrasonic treatment units according to one of Claims 1 to 6, containing a cylindrical filtering element according to one of Claims 1 to 6 so as to create an in-line multi-filter device.

11. Ultrasonic filter according to Claim 10, **characterized in that** it comprises several converters powered in parallel by the same generator.

## Patentansprüche

1. Vorrichtung zum kontinuierlichen Filtrieren von Flüssigkeiten mit einem Filtrierungselement (14) innerhalb eines Gehäuses, das durch einen Ultraschallwandler (19) in Ultraschallschwingungen versetzt wird, **dadurch gekennzeichnet, dass**
das Gehäuse ein röhrenförmiger metallischer Körper (11) mit zylindrischer Innenfläche (13) und kreisförmigem Querschnitt ist, der an seinen zwei Enden für den Einlass (10) und den Auslass (15) offen ist, wobei die Außenfläche des röhrenförmigen metallischen Körpers in der Nähe der Knotenzone einen mit der Röhre koaxialen und radial vorspringenden Kragen (17) aufweist, wobei dieser Kragen an seinem Rand mit einem Ultraschallwandler (19) ausgestattet ist, der radial vorspringt und dessen Frequenz der Schwingungsfrequenz des Kragens (17) und der longitudinalen Schwingungsfrequenz des röhrenförmigen metallischen Körpers (11) entspricht, wobei der röhrenförmige metallische Körper (11), der Kragen (17) und der Ultraschallwandler (19) zusammen eine modulare Einheit (12) zur Ultraschallbehandlung bilden,
wobei das zylindrische Filtrierungselement (14) eine Oberfläche für die Filtrierung von wenigstens etwa 50 cm² und vorzugsweise von etwa 80 cm² mit einer Maschenweite von weniger als etwa 20 µm aufweist und in dem röhrenförmigen metallischen Körper (11) in koaxialer Art und Weise zu letzterem zwischen dem Einlass- (10) und Auslassende (15) angeordnet ist,
wobei die nominale in den röhrenförmigen metallischen Körper abgegebene Ultraschallleistungsdichte größer als etwa 2 Watt pro cm² der Filtrierungsoberfläche beträgt.

2. Vorrichtung nach Anspruch 1, **dadurch gekennzeichnet, dass** die Länge des röhrenförmigen metallischen Körpers (11) gleich einem ganzen Vielfachen der halben Wellenlänge der von dem Wandler erzeugten Ultraschallfrequenz ist, wobei der Innen- und Außendurchmesser des Kragens (17) so bestimmt wird, dass die Schwingungsfrequenz des Kragens bei der gleichen Ultraschallschwingungsfrequenz liegt wie die, die durch den Wandler (19) erzeugt wird.

3. Vorrichtung nach einem der Ansprüche 1 und 2, **dadurch gekennzeichnet, dass** das zylindrische Filtrierungselement (14) ausgewählt wird unter metallischen gewebten oder nicht gewebten, auf metallischen Trägern aufgebrachten Filtern, synthetischen gewebten oder nicht gewebten, auf metallischen Trägern aufgebrachten Filtern, metallischen mehrlagigen gesinterten Filtern und mineralischen oder metallischen selbsttragend gesinterten Filtern.

4. Vorrichtung nach einem der Ansprüche 1 bis 3, **dadurch gekennzeichnet, dass** das filtrierende zylindrische Element (14) mit dem röhrenförmigen metallischen Körper über Verbindungsteile verbunden ist, die derart aufgebaut sind, dass die zu filtrierende Flüssigkeit von außen nach innen in das filtrierende Element strömt.

5. Vorrichtung nach einem der Ansprüche 1 bis 3, **dadurch gekennzeichnet, dass** das filtrierende zylindrische Element (14) mit dem röhrenförmigen metallischen Körper über Verbindungsteile verbunden ist, die so aufgebaut sind, dass die zu filtrierende Flüssigkeit von innen aus dem filtrierenden Element nach außen in Bezug auf letzteres strömt.

6. Vorrichtung nach einem der Ansprüche 1 bis 3, **dadurch gekennzeichnet, dass** die Verbindungsteile zwischen dem röhrenförmigen metallischen Körper und dem filtrierenden zylindrischen Element wie auch der Kreis für die Umwälzung des Fluids, das behandelt werden soll, derart aufgebaut sind, dass die Filtrierung nach dem Prinzip der tangentialen Filtrierung abläuft.

7. Verfahren zum Betreiben einer Vorrichtung zum Filtrieren nach einem der Ansprüche 1 bis 5, die in einem Umwälzkreis für die zu filtrierende Flüssigkeit integriert ist, wobei letztere es ermöglicht, den Druckunterschied zwischen dem Eingang und dem Ausgang der Vorrichtung zu messen und diesen Druckunterschied einzustellen, indem der Durchsatz der Flüssigkeit in dem Kreis und/oder der Druckverlust unterhalb der Vorrichtung geregelt wird.

8. Verfahren zum Betreiben einer Filtrierungsvorrichtung nach einem der Ansprüche 1 bis 3, die in einem Umwälzungskreis für die zu filtrierende Flüssigkeit integriert ist, wobei letztere es ermöglicht, das Filtrierungselement wiederholt im Gegenstrom zu reinigen, wenn der bestehende Druckunterschied zwischen dem Eingang und dem Ausgang des Filtrierungselements einen vorgegebenen Schwellenwert übersteigt.

9. Verfahren zum Betreiben einer Filtrierungsvorrichtung nach einem der Ansprüche 1 bis 6, **dadurch gekennzeichnet, dass** die Intensität der Kavitation in der zu filtrierenden Flüssigkeit durch Einstellung der Ultraschallschwingungsleistung und/oder durch Wahl der Form eines Verstärkers zwischen dem Ultraschallstrahler und der Außenfläche des Kragens eingestellt wird, der in der Nähe der Knotenzone des röhrenförmigen metallischen Körpers radial vorspringt.

10. Ultraschallfilter, **dadurch gekennzeichnet, dass** er als Hintereinanderschaltung oder Parallelschaltung von mehreren modularen Einheiten für die Ultraschallerzeugung gemäß einem der Ansprüche 1 bis 6 aufgebaut ist, wobei ein zylindrisches Filtrierungselement verschlossen wird, gemäß einem der Ansprüche 1 bis 6, so dass sich eine Kette von mehreren Filtern ergibt.

11. Ultraschallfilter nach Anspruch 10, **dadurch gekennzeichnet, dass** er mehrere Wandler umfasst, die parallel durch denselben Generator versorgt werden.
